# EUROPÄISCHE PATENTSCHRIFT

(11) **EP 1 571 090 B1**
(45) Veröffentlichungstag und Bekanntmachung des Hinweises auf die Patenterteilung: **08.11.2006**
(21) Anmeldenummer: 05004724.0
(22) Anmeldetag: 03.03.2005
(51) Int. Cl.: B65B 51/04

(54) **Magazinstange**
Clip magazine
Barre des agrafes

(30) Priorität: 03.03.2004 DE 102004010392
(43) Veröffentlichungstag der Anmeldung: 07.09.2005
(73) Patentinhaber: Poly-clip System GmbH & Co. KG, 60489 Frankfurt am Main (DE)
(72) Erfinder: Töpfer, Klaus, 64572 Büttelborn (DE)
(74) Vertreter: Eisenführ, Speiser & Partner

(56) Entgegenhaltungen:
- US-A- 4 571 805
- US-A- 4 675 945
- US-A- 5 586 424

## Beschreibung

Die Erfindung betrifft eine Magazinstange mit einem eingangsseitigen Ende (kurz: Eingang) und einem ausgangsseitigen Ende (kurz: Ausgang) zum Führen eines Clipstranges von einem oberhalb eines Vereinzelungsfensters einer Verschließvorrichtung angeordneten Clipvorrat zu dem im Wesentlichen vertikal angeordneten Vereinzelungsfenster. Die Erfindung betrifft ferner eine Clipzuführung mit einer solchen Magazinstange.

Mit der eingangs erwähnten Verschließvorrichtung ist eine zur Herstellung von Würsten mit einem meist pastösen Füllgut in einer flexiblen Schlauchhülle (beispielsweise einem Darm) gemeint. Diese Verschließvorrichtungen (nachstehend auch Clipautomaten genannt) funktionieren üblicherweise dergestalt, dass die einseitig verschlossene, gefüllte Schlauchhülle mittels sog. Verdrängerelemente an einer Stelle eingeschnürt und daraufhin in dem Einschnürbereich befindliches Füllgut durch eine Bewegung in Richtung der Schlauchachse verdrängt wird. Auf dem so gebildeten Schlauchzopf wird wenigstens ein Verschlusselement (oder Clip) angebracht und verschlossen. Auf diese Weise können entweder zusammenhängende Wurstketten produziert oder beispielsweise einzelne Schläuche oder Beutel verschlossen werden. Mit sogenannten Doppelclipautomaten werden gleichzeitig zwei nebeneinanderliegende Clips auf dem in der beschriebenen Weise gebildeten Schlauchzopf angebracht und verschlossen, wonach dieser zwischen den beiden Clips durchtrennt wird. Auf diese Weise werden einzelne Würste in Serie produziert.

Wie in allen Bereichen der Technik konnte auch auf dem Gebiet der Clipmaschinen die Produktivität in der Vergangenheit um ein erhebliches Maß gesteigert werden. Dies erfordert eine entsprechende Anpassung der peripheren Einrichtungen - so auch der Magazinstange und der gesamten Clipzuführung. Die einfachsten bekannten Clipzuführungen bestehen aus einer im Wesentlichen vertikal angeordneten Magazinstange, auf die von Hand ein aus einer Vielzahl hintereinander aufgereihter und durch ein Siegelband verbundener Clips bestehender "endlicher" Clipstrang aufgezogen wird. Die Magazinstange ist bekanntermaßen an ihrem unteren, der Verschließeinrichtung nahen Ende in einem Radius so umgelenkt, dass der Clipstrang einem in der Regel senkrecht angeordneten Vereinzelungsfenster der Verschließvorrichtung, horizontal zugeführt wird. Hier, am Ausgang der Magazinstange wird der in Vorschubrichtung vorderste Clip von dem Clipstrang zur weiteren Verarbeitung getrennt.

Der Vorschub wird bei dieser Clipzuführung üblicherweise durch die Schwerkraft erzeugt. Der maximale Vorrat an Clips ist durch die Kapazität der Magazinstange vorgegeben. Da diese aufgrund des Schwerkraftantriebs vertikal angeordnet ist und ihr Eingang zum Zweck des manuellen Aufziehens der Clipstränge gut erreichbar sein muss, ist ihre Länge und damit Kapazität sehr begrenzt. Sie ist für schnell arbeitende Verschließvorrichtungen nur begrenzt geeignet, da ein ständiges, manuelles Nachmagazinieren erforderlich wäre.

Aus der US 3,189,220 ist für einen anderen Anwendungsfall ein horizontaler Riemen- und ein Reibrollenantrieb für endliche Stränge von Heftklammern bekannt, welche in einem vorgeschalteten, vertikalen Magazin bevorratet sind und der Schwerkraft folgend automatisch nachgelegt werden.

Eine weiterentwickelte, ebenfalls bekannte Clipzuführung zeichnet sich dadurch aus, dass der Clipstrang auf einer - auch aus Hygienegründen - oberhalb des Vereinzelungsfensters aufgehängten Spule zu einem größeren Clipvorrat aufgewickelt ist. Der quasi "endlose" Clipstrang wird von dieser Spule abgezogen und in den Eingang einer Magazinstange eingeführt. Die Geometrie der Magazinstange gleicht im Wesentlichen der der oben beschriebenen Magazinstange, die aufgrund des Spulenvorrats aber nicht mehr die Funktion der Vorratsbildung zu erfüllen hat. Der vertikale Teil der Magazinstange kann daher kürzer sein.

Der Vorschub wird bei dieser Clipzuführung üblicherweise durch einen aktiven, im Bereich der Magazinstange an dem Clipstrang angreifenden Clipantrieb erzeugt. Es sind zwei Antriebsmechanismen bekannt. Zum einen kann die erforderliche Antriebskraft über zwei auf gegenüberliegenden Seiten an dem Clipstrang anliegende, permanent oder intermittierend angetriebene Reibrollen eingeleitet werden. Alternativ kann auch ein Antrieb vorgesehen werden, bei dem ein linear hin und her bewegliche, an dem Clipstrang angreifende Mitnehmer schrittweise Vorschub erzeugt. Eine Clipzuführung mit einem solchen Antrieb ist beispielsweise in der US 5,586,424 A gezeigt. Eine Weiterbildung dieses Antriebs sieht zwei linear hin und her bewegliche Mitnehmer vor, die abwechselnd schrittweise Vorschub erzeugen.

Ist der Clipvorrat verbraucht, d.h. die Spule abgewickelt, bleibt immer ein restlicher Clipstrang zwischen dem Spulenkörper und dem Eingang der Magazinstange übrig, der als loses Ende mangels Führung oberhalb des Eingangs der Magazinstange abknickt oder so verkantet, dass er nicht mehr in den Eingang der Magazinstange einfädelt. Daher wird die Verschließvorrichtung angehalten, wenn die Clipspule leer ist. Zum Wechseln des Clipvorrats muss der leere Spulenkörper von seinem Halter herunter und der restliche Clipstrang entgegen der Vorschubrichtung aus der Magazinstange heraus gezogen werden, damit der Anfang eines neuen Clipstrangs eingefädelt werden kann.

Die durch dieses Nachmagazinieren bedingten Standzeiten sind unerwünscht. Ferner bleibt bei jedem Wechsel ein unverwertbarer Rest des Clipstrangs übrig. Um das Verhältnis aus Betriebs- zu Standzeit, als auch das Verhältnis aus genutzten Clips zu Restclips zu verbessern, wurden die Clipspulen auf eine Kapazität mehrerer tausend Clips vergrößert. An dieser Stelle stoßen die Bemühungen, die Produktivität und Ausbeute zu steigern, jedoch an eine Grenze, da die Clipspulen in der Regel manuell auf den dafür vorgesehenen Halter gehoben werden müssen, so dass deren Gewicht nicht unbegrenzt weiter gesteigert werden kann.

Aufgabe der vorliegenden Erfindung ist es demgemäss, eine Magazinstange bereitzustellen, durch die sich die Produktivität und die Ausbeute von Verschließvorrichtungen erhöhen lässt.

Die Aufgabe wird erfindungsgemäß durch eine Magazinstange der eingangs genannten Art gelöst, die eine erste Umlenkung aufweist, dergestalt dass der Clipsstrang von unten in den Eingang einführbar ist.

Bei einem aufgrund der Geometrie der Magazinstange von unten in den Eingang eingeführten Clipstrang, knickt das lose Ende des restlichen Clipstrangs nicht mehr im Bereich des Eingangs ab, sondern hängt im Wesentlichen der Einführrichtung folgend senkrecht nach unten, so dass der restliche Clipstrang aufgebraucht werden kann. Dabei kann der Clipstrang entlang der Magazinstange durch deren Umlenkung anschließend so weit nach unten geführt werden, dass eine Anordnung des Clipvorrats oberhalb des Vereinzelungsfensters möglich ist, so dass die Hygieneanforderungen nicht darunter leiden. Schließlich steigert diese Maßnahme den Bedienungskomfort.

Dies geschieht vorzugsweise durch einen stromabwärts hinter der ersten Umlenkung befindlichen Abschnitt, auf dem der Clipstrang nach unten geführt wird, und eine weiter stromabwärts befindliche zweite Umlenkung, dergestalt dass die Magazinstange im Wesentlichen horizontal in ihren Ausgang mündet.

In einer bevorzugten Ausführungsform wird die erste Umlenkung durch einen in etwa halbkreisförmigen Abschnitt der Magazinstange gebildet wird. Diese Ausgestaltung ist insbesondere vorteilhaft im Hinblick auf eine optimale Raumausnutzung bei maximaler Länge der Magazinstange, wodurch ein Puffervorrat geschaffen wird, der einer Bedienperson Zeit zum Wechseln des Clipvorrats gibt, während die Verschließvorrichtung noch weiterarbeiten kann.

Weitere Vorteile werden dadurch erreicht, dass die Magazinstange mittels einer Aufnahme um eine durch den halbkreisförmigen Abschnitt bestimmte Rotationsachse schwenkbar ist. Dadurch kann nämlich der Ausgang nahe dem Vereinzelungsfenster von diesem weggeschwenkt werden, wenn sich in diesem Bereich beispielsweise eine Betriebsstörung ereignet hat, während bisher die Magazinstange üblicherweise mühsam abgenommen werden musste.

Wird die Magazinstange mit einem Halter für eine den Clipvorrat bereithaltende Spule zu einer erfindungsgemäßen Clipzuführung kombiniert, so kann die kompakte Bauweise dahingehend verbessert werden, dass der Halter eine Axialaufnahme für die Spule aufweist, deren Achse mit der Rotationsachse der Magazinstange zusammenfällt, wobei eine weitere vorteilhafte Ausgestaltung vorsieht, dass der Radius des halbkreisförmigen Abschnitts im Wesentlichen dem Radius der Spule gleicht.

Es folgt die Erläuterung der Erfindung anhand eines Ausführungsbeispiels. In der Zeichnung zeigen:
- Fig. 1: ein Ausführungsbeispiel einer Magazinstange der erfindungsgemäßen Clipzuführung in der Seitenansicht;
- Fig. 2: einen Clipspulenhalter gemäß einer Ausführungsform der erfindungsgemäßen Clipzuführung in der Seitenansicht;
- Fig. 3: eine Seitenansicht eines Paares gekoppelter Antriebselemente gemäß demselben Ausführungsbeispiel der erfindungsgemäßen Clipzuführung;
- Fig. 4: zwei Paare gekoppelter Antriebselemente in der Draufsicht;
- Fig. 5: eine Teilansicht des Ausführungsbeispiels der erfindungsgemäßen Clipzuführung von oben;
- Fig. 6: das Ausführungsbeispiel der erfindungsgemäßen Clipzuführung aus Fig. 5 in der totalen Seitenansicht mit den zwei Paaren gekoppelter Antriebselemente in einer ersten Endstellung;
- Fig. 7: dieselbe Ansicht des Ausführungsbeispiels der Clipzuführung mit den zwei Paaren gekoppelter Antriebselemente in einer sich kreuzenden Stellung; und
- Fig. 8: die Seitensicht auf die erfindungsgemäße Clipzuführung mit einer weggeschwenkten Magazinstange.

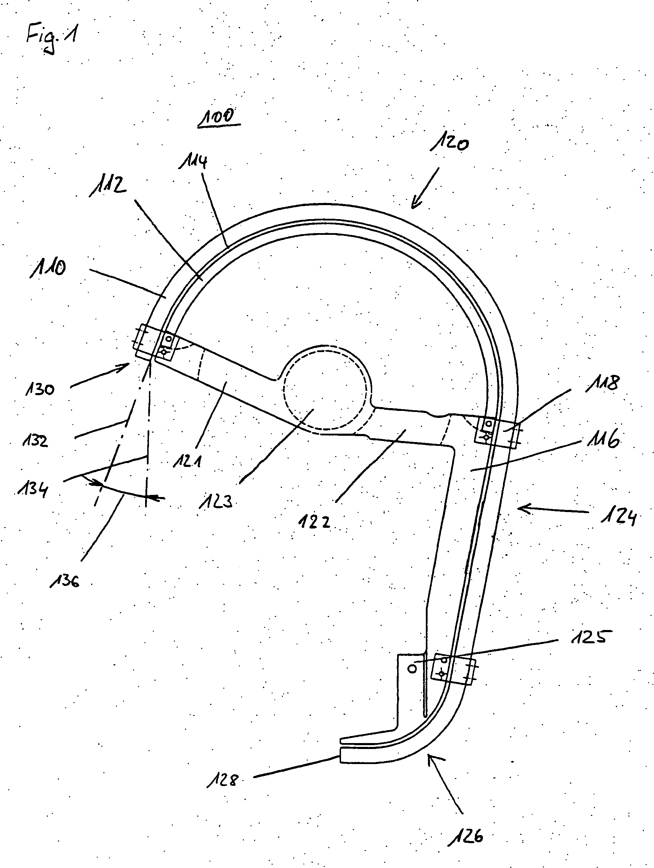

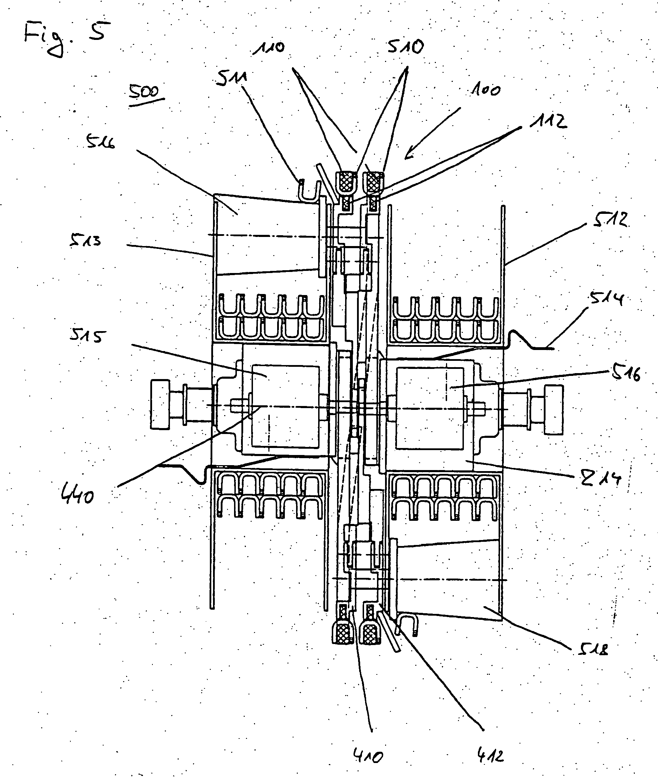

Die in Fig. 1 gezeigte, erfindungsgemäße Magazinstange 100 setzt sich aus mehreren strukturellen Elementen zusammen. Zum Einen weist diese eine äußere Führungsschiene 110 auf, deren Querschnitt, wie in Fig. 5 dargestellt ist, im Wesentlichen dem offenen Querschnittsprofil einer U-förmig (vor-gebogenen) Verschlussklammer (Clip) 510 entspricht. Parallel zu der äußeren Führungsschiene 110 ist eine innere Führungsschiene 112 positioniert, die mit der äußeren Führungsschiene 110 einen Spalt 114 einschließt. Das Spaltmaß entspricht in etwa der Stärke des Clipdrahts, so dass der Clipstrang sicher zwischen den beiden Führungsschienen 110 und 112 auf die in Fig. 5 gezeigte Weise geführt wird. Die innere Führungsschiene 112 setzt sich auf der in Fig. 1 gezeigten rechten Seite der Magazinstange 100 funktional in einer Aufhängung 116 fort, welche zugleich das zentrale Bauteil für die gesamte Magazinstange 100 in der nachstehend beschriebenen Weise bildet.

An der Aufhängung 116 sind mittels dreier Verbindungselemente 118 die äußere Führungsschiene 110 und die innere Führungsschiene 112 dergestalt miteinander verbunden, dass sich eben jener Spalt 114 ausbildet. Ferner weist die Aufhängung 116 zwei sich zum Zentrum eines oberen, etwa halbkreisförmigen Abschnitts 120 der Magazinstange 100 erstreckende Speichen 121, 122 auf, die in diesem Zentrum mit einer Aufnahme 123 verbunden sind. Mittels der Aufnahme 123 kann die gesamte Magazinstange 100 an einer nicht dargestellten, korrespondierenden Halterung um die Rotationssymmetrieachse (kurz: Rotationsachse) jenes halbkreisförmigen Abschnitts 120 schwenkbar befestigt werden. Schließlich ist im unteren Bereich eines geraden, in etwa senkrechten Abschnitts 124 ein Befestigungselement 125 zur Arretierung der Magazinstange 100 in einer Betriebsposition an der Verschließvorrichtung vorgesehen.

Insgesamt besteht die Magazinstange 100 aus drei funktionalen Abschnitten: dem eine erste Umlenkung bildenden halbkreisförmigen Abschnitt 120, stromabwärts hinter der ersten Umlenkung dem geraden, im Betrieb im Wesentlichen senkrecht angeordneten Abschnitt 124 und weiter stromabwärts einem eine zweite Umlenkung bildenden teilkreisförmigen Abschnitt 126.

Die erste Umlenkung 120 ist so ausgestaltet, dass der Eingang 130 der Magazinstange 100 nach unten weist - oder mit anderen Worten - von unten mit einem Clipstrang bestückbar ist. Dabei kommt es nicht darauf an, dass die Magazinstange 100 mit einem vertikalen Abschnitt beginnt, sondern dass die Magazinstange 100 im Eingangsbereich eine solche Orientierung aufweist, dass das Einfädeln eines losen oder freien Endes eines Clipstrangs in deren Eingang 130 gewährleistet ist. Die Orientierung der Magazinstange im Eingangsbereich wird durch eine Tangente 132 an den halbkreisförmigen Abschnitt 120, genauer an eine durch den Spalt 114 gebildete Führungsbahn, verdeutlicht. Da der Clipstrang - wie eingangs erwähnt - typischerweise aus einer Vielzahl aneinandergereihter einzelner Clips besteht, die im Bereich ihres Rückens 512 (siehe Fig. 5) mit einem Siegelband verbunden sind, wird das freie Ende des Clipstrangs der Schwerkraft folgend senkrecht nach unten hängen. Dadurch schließt das freie Ende des Clipstrangs, dessen Orientierung durch eine Vertikale 134 symbolisiert ist, mit der Tangente 132 einen Zwischenwinkel 136 ein, der jedenfalls ein Maß nicht übersteigen darf, bei welchem das Einfädeln des freien Endes des Clipstrangs nicht mehr gewährleistet wird. Es kommt insoweit auch nicht darauf an, dass die erste Umlenkung durch einen wie in Fig. 1 gezeigten halbkreisförmigen Abschnitt 120 gebildet wird. Sie kann beispielsweise ebenso in einzelne Kreisabschnitte mit dazwischen liegenden andersgearteten Abschnitten eingeteilt sein.

Auf dem senkrechten Abschnitt 124 wird der Clipstrang stromabwärts hinter der ersten Umlenkung nach unten geführt. Er weist in dem gezeigten Ausführungsbeispiel eine Länge und Neigung auf, die durch die Abmessungen der Spulen und der Verschließmaschine bestimmt ist. Selbstverständlich kann die Magazinstange zwischen dem Eingang 130 und dem Ausgang 128 - auch auf andere Weise - an verschiedene geometrischen Randbedingungen angepasst werden.

Weiter stromabwärts wird der Clipstrang nochmals mittels des teilkreisförmigen Abschnitts 126 umgelenkt. Dieser Abschnitt läuft mit im Wesentlichen horizontaler Tangente aus, so dass die Magazinstange 100 unter einem rechten Winkel mit ihrem Ausgang 128 in das (hier nicht dargestellte) im Wesentlichen senkrecht angeordnete Vereinzelungsfenster der Verschließvorrichtung mündet.

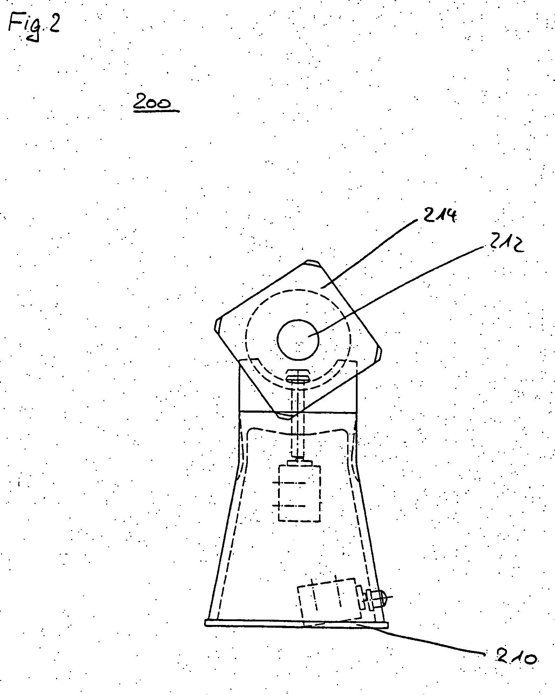

Der in Fig. 2 gezeigte und mit der Magazinstange 100 korrespondierende Clipspulenhalter 200 ist beispielsweise zur Montage auf der Gehäuseoberseite einer Verschließvorrichtung geeignet. Er weist einen Sockel 210 auf, mit dem er an einer oberen Gehäusefläche der Verschließvorrichtung angeflanscht werden kann. An seinem oberen, dem Sockel gegenüberliegenden Ende weist er eine Achse 212 auf. Auf dieser Achse 212 ist eine Spulenaufnahme 214 drehbar gelagert. In Fig. 5 ist eine Anordnung in der Draufsicht gezeigt, die erkennen lässt, dass in einer symmetrischen Ausführung des Clipspulenhalters 200 zwei Clipspulen 512, 513 von gegenüberliegenden Seiten auf entsprechende Aufnahmen 214 axial aufgesteckt werden können. Diese Spulen werden durch Federn 514 gegen ein versehentliches Abrutschen von den Spulenaufnahmen gesichert.

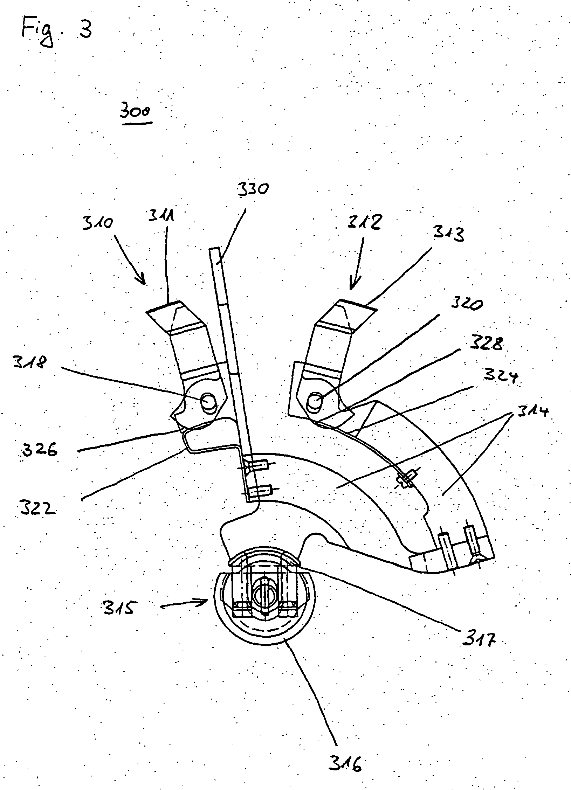

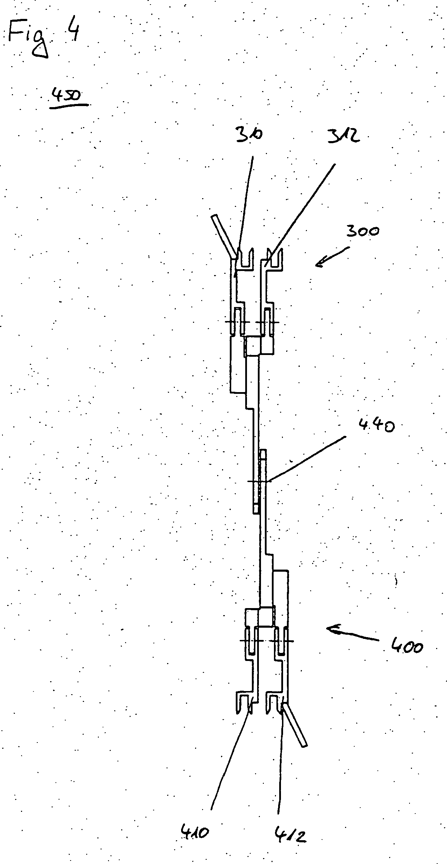

Das in Fig. 3 dargestellte Paar 300 gekoppelter Antriebselemente 310, 312 besteht aus jenen Antriebselementen 310, 312, die jeweils mit dem hier nicht dargestellten Clipstrang in Eingriff bringbare Eingriffsflächen 311, 313 aufweisen, und einem gemeinsamen Arm 314, an dem beide Antriebselemente 310, 312 befestigt sind. Wie in den Fig. 4 und 5 zu sehen ist, sind die Antriebselemente im Eingriffsbereich gegabelt, damit sie die innere Führungsschiene 112 umgreifen und symmetrisch an dem Clipstrang 510 angreifen können. Die Eingriffsflächen können gezackt, aufgeraut oder gummiert sein, so dass entweder eine reib- oder formschlüssige Mitnahme des Clipstranges in Betracht kommt.

Die Antriebselemente 310, 312 weisen den Eingriffsflächen gegenüberliegend Lager 318 bzw. 320 zur Befestigung an dem Arm 314 auf, die sowohl eine Schwenkbewegung der Antriebselemente als auch eine davon unabhängige lineare Bewegung der Antriebselemente in radialer Richtung erlauben.

Die Antriebselemente weisen ferner an ihrem den Eingriffsflächen gegenüberliegenden Ende jeweils eine Kurve 326, 328 auf. Zwei Federn 322, 324 liegen an diesen Kurven an. Die Kurven sind so geformt, dass die Federn durch ihre Federkraft ein Moment auf die Antriebselemente 310, 312 ausüben, welches diese in ihrer Ruhestellung in eine aufgerichtete (nicht weggeschwenkte) Position zwingt. Ein nicht dargestellter Anschlag sorgt dafür, dass diese Position nicht überschritten werden kann und dass somit eine Sperrrichtung vorgegeben wird. In der anderen, sog. Freilaufrichtung können die Antriebselemente gegen die Federkraft weggeschwenkt werden. Sie wirken daher wie Klinken. Aufgrund des spiegelsymmetrischen Äufbaus entspricht die Freilaufrichtung der einen der Sperrrichtung der anderen Klinke desselben Paares 300.

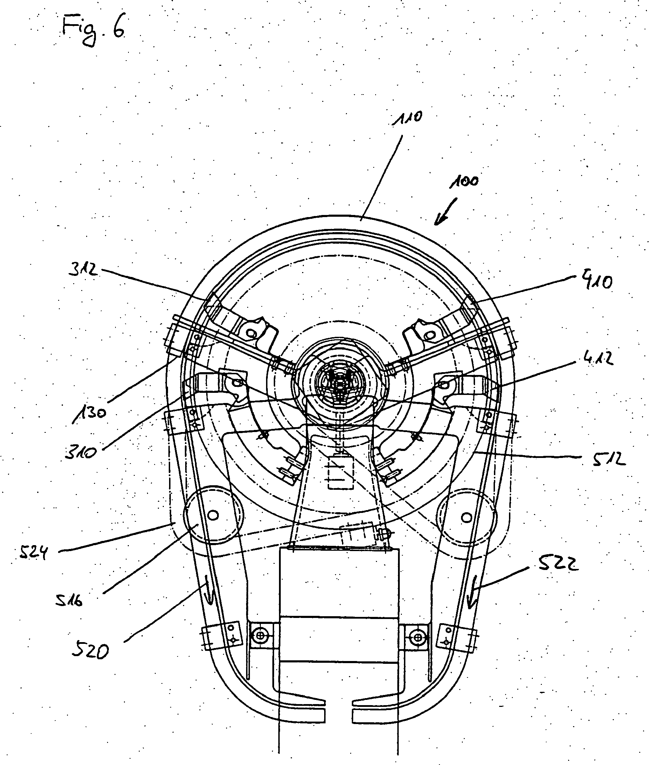

Die Federn 322, 324 bewirken ferner, dass die Antriebselemente 310, 312 radial nach außen gegen den Clipstrang angedrückt werden, vgl. Fig. 6. Sie stellen somit im Rahmen der durch die Lager 138, 320 ermöglichten linearen Bewegung einen Längen- oder Toleranzausgleich sicher und sorgen zugleich für den benötigten Andruck gegen die Clips, um einen sicheren Vorschub zu gewährleisten.

Der Arm 314 verbindet die Antriebselemente 310, 312 mit einer Nabe 315, die sich aus einem achsfesten Teil 316 und einem radial beweglichen Teil 317 zusammensetzt und deren Schwenkachse zu den Eingriffsflächen 311, 313 beider Antriebselemente im Wesentlichen gleich beabstandet ist. Die Schwenkachse fällt wie in den Fig. 5 bis 8 ersichtlich wird, bei dem hier gezeigten Ausführungsbeispiel mit der Achse 212 der Spulenaufnahme 214 und der Rotationsachse der Magazinstangenaufnahme 122 zusammen. Der sich aus dieser Anordnung ergebende Vorteil wird aus der unter Bezugnahme auf die Fig. 6 bis 8 erfolgenden Funktionsbeschreibung ersichtlich.

Der radial bewegliche Teil 317, der mit dem Arm 314 verbunden ist, ist in einer zu dem achsfesten 316 Teil beabstandeten, ausgefahrenen Stellung dargestellt, in der die Antriebselemente 310, 312 an dem Clipstrang anliegen. Der radial bewegliche Teil 317 kann - beispielsweise durch einen pneumatischen Antrieb entweder manuell oder automatisch betätigt - an den achsfesten Teil 316 heran- und wieder weggefahren werden. Hierdurch werden die Antriebselemente dieses Paares gemeinsam radial ein- bzw. ausgefahren und mit dem Clipstrang in bzw. außer Eingriff gebracht.

Schließlich ist an dem Arm 314 eine Handhabe 330 angebracht, die ein manuelles Verschieben des Paares gekoppelter Antriebselemente 300 samt Nabe 315 ermöglicht.

In Fig. 4 ist eine Anordnung zweier Paare gekoppelter Antriebselemente 300 und 400 in der Draufsicht dargestellt. Diese sind koaxial zueinander ausgerichtet, d.h. dass die Schwenkachsen 440 ihrer Naben zusammen fallen. Sie sind ferner in identischer Weise aufgebaut, jedoch seitenverkehrt so gegeneinander angeordnet, dass die Antriebselemente 310, 312 bzw. 410, 412 in zwei parallelen Ebenen senkrecht zur Schwenkachse 440 nebeneinander liegen. Anders gesagt wirken die Antriebselemente 310 und 410 bzw. 312 und 412 jeweils in derselben Ebene, d.h. auf denselben Clipstrang. Die Doppelebenenanordnung macht den hier gezeigten Clipantrieb 450 tauglich für den Einsatz in einer sog. Doppelclipzuführung 500.

In Fig. 5 wird dieses Zusammenwirken sowie der konstruktive Zusammenhang der bisher vorgestellten Elemente der erfindungsgemäßen Clipzuführung in der teilweise geschnittenen Draufsicht verdeutlicht. Zum Einen ist erkennbar, dass - wie bereits vorher angesprochen - die Achsen 440 der Spulenaufnahme 214, der Naben 315 sowie der Magazinstangen 100 zusammen fallen. Ferner sieht man, dass es sich um eine Doppelclipzuführung 500 mit zwei seitenverkehrt gegeneinander angeordneten Clipzuführungen handelt, die sich einen gemeinsamen Spulenhalter teilen. Auf der gemeinsamen Achse 440 liegen zwei vorzugsweise pneumatische Schwenkantriebe 515, 516, die mit den Naben 315 verbunden sind und jeweils eines der Paare gekoppelter Antriebselemente 300, 400 (in entgegengesetzter Richtung) antreiben.

Jeweils ein auf einen Spulenkörper 512, 513 aufgewickelter Clipstrang wird nach schräg unten abgewickelt und über jeweils eine zugeordnete Umlenkrolle 516 bzw. 518 dem Eingang 130 der jeweils zugeordneten Magazinstange 100, wie in Fig. 6 illustriert ist, zugeführt. Die Umlenkrollen 516, 518 sind kegelförmig in Richtung auf die Mittelebene zwischen den Clipzuführungen verjüngt, so dass der Clipstrang 511 beim Abwickeln in axialer Richtung auf die jeweilige Magazinstange 110 hingelenkt wird.

Die beiden Paare gekoppelter Antriebselemente 300 und 400 befinden sich in der in Fig. 6 gezeigten Darstellung jeweils in einer Endposition ihrer Schwenkbewegung, in der das jeweils obere Antriebselement 312 bzw. 410 am Eingangsbereich und somit am Anfang seines Vorschubweges angelangt

ist. Mit Vorschubweg ist der Weg entlang der durch die Magazinstange 100 bzw. den Spalt 114 vorgegebenen Führungsbahn gemeint, über den das in Eingriff befindliche Antriebselement seinen Vorschub auf den Clipstrang einleitet. Entsprechend ist in dieser Position das jeweils untere Antriebselement 310 und 412 am Ende seines Vorschubweges angelangt. Im Betrieb ist vorgesehen, dass das zuerst in dieser Endposition angelangte Antriebselement die Umkehrung der Schwenkrichtung beider Paare gekoppelter Antriebselemente auslöst.

Dies kann so realisiert werden, dass an jeder Endposition der Doppelclipzuführung 500 ein (nicht dargestellter) Positionsendschalter vorgesehen ist. Diese jedem Vorschubweg zugeordneten, insgesamt also zwei Positionsendschalter, können durch beide Paare gekoppelter Antriebselemente beispielsweise von einem Abschnitt, einer Nocke oder einem Vorsprung des jeweiligen Armes 314 oder der zugeordneten Nabe 315 betätigt werden. Die beiden Positionsendschalter sind vorzugsweise über eine gemeinsame Steuerung mit beiden Antrieben verbunden, so dass immer der zuerst betätigte Positionsendschalter die Richtungsumkehr aller Antriebselemente auslöst.

Es kann aber auch ein (zentraler) Positionsendschalter genügen, wenn dieser beispielsweise als Flip-Flop-Schalter ausgeführt ist. Er kann dann abwechselnd durch jeweils eine an jedem Arm 314 oder jeder Nabe 315 vorgesehen Nockenkurve betätigt werden.

Während also vor dem Umschalten das jeweils untere Antriebselement 310, 412 mit dem Clipstrang auf der zugeordneten Magazinstange in Eingriff war und diesen in die durch einen Pfeil 520, 522 gekennzeichnete Vorschubrichtung vorangetrieben hatte, wurde das damit jeweils gekoppelte obere Antriebselement 312, 410 in seiner Freilaufrichtung über den Clipstrang auf der jeweils anderen Magazinstange hinweggezogen. Nach dem Betätigen eines Positionsendschalters in der oben beschriebenen Weise, wird die Drehrichtung der Clipantriebe 316 umgekehrt. Dadurch gelangen die in Fig. 6 jeweils oberen Antriebselemente 312, 410 durch ihre Klinkenfunktion automatisch - gewissermaßen auf passive Weise - in Eingriff mit dem auf der zugeordneten Magazinstange aufgereihten Clipstrang. Die zuvor in Eingriff befindlichen Antriebselemente 310, 412 werden nun ebenfalls bedingt durch ihre Klinkenfunktion - passiv - in ihrer Freilaufrichtung entgegen der Vorschubrichtung zurückgezogen.

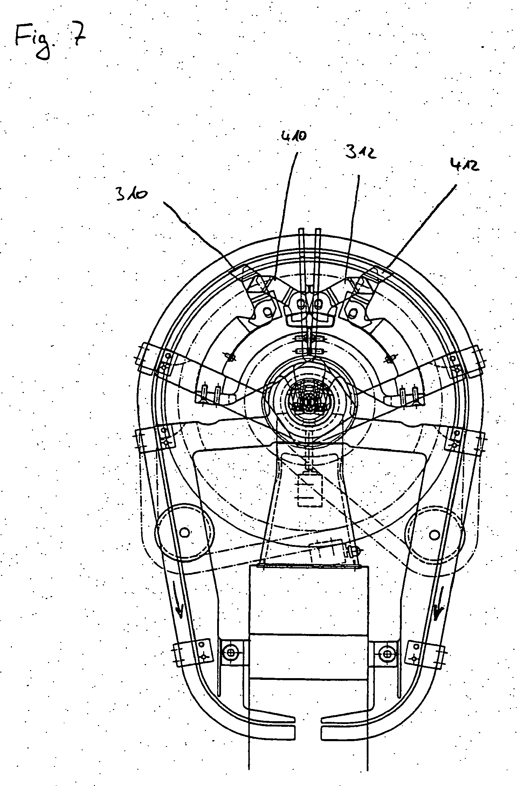

Der Wechsel zwischen der Sperr- und Freilaufeigenschaft der Antriebselemente ist nicht zwingend erforderlich, sondern kann durch eine mit der Richtungsumkehr des Schwenkantriebs verbundene, aktive radiale Ein- und Ausfahrbarkeit ersetzt werden. Jedoch ist die Schwenkbarkeit der Antriebselemente um deren Lager 318, 320 zwingend erforderlich, damit sich die beiden auf denselben Clipstrang wirkenden Antriebselemente 310 und 410 bzw. 312 und 412 in der in Fig. 7 gezeigten Weise ausweichen können.

In Fig. 6 ist noch zu erkennen, dass der Vorschubweg der Antriebselemente beinahe den vollständigen halbkreisförmigen Abschnitt 120 der Magazinstange 100 einschließt. Je größer dieser maximale Abstand zwischen jeweils zwei auf denselben Clipstrang wirkenden Antriebselemente ist, desto größer ist der Pufferbereich, der zum Wechsel der Clipspulen zur Verfügung steht. Solange sich das Ende eines aufgebrauchten Clipstranges innerhalb dieses Winkelbereiches befindet, hat man genügend Zeit, den Anfang eines neuen Clipstranges über den Eingang 130 der entsprechenden Magazinstange 100 aufzufädeln, zwischen dem Anfang des neuen Clipstrangs und dem Ende des alten Clipstrangs einen lückenlosen Anschluss wiederherzustellen und über einen nicht dargestellten, manuell betätigbaren Schalter eine Umschaltung der Laufrichtung zu bewirken. Der manuell betätigbare Schalter ist demnach mit dem oder den Positionsendschalter(n) über eine Steuerung verbunden, so dass die Betätigung irgendeines dieser Schalter die Richtungsumkehr aller Antriebselemente auslöst. In Folge des Umschaltens gelangt das jeweils zweite Antriebeselement (aktiv oder passiv) in Eingriff mit dem Anfang des neuen Clipstranges, der das Ende des alten Clipstrangs vor sich herschiebt. Ein lückenloser Nachschub an Clips kann so im laufenden Betrieb ohne Standzeiten sichergestellt werden.

Für das Wechseln der Clipspulen 512, 513 steht sogar ein noch größerer Zeitraum zur Verfügung, da das lose Ende eines aufgebrauchten Clipstrangs, an dem nach unten weisenden Eingang der entsprechenden Magazinstange hängt und über diesen restlos aufgezogen werden kann. Dieser zusätzliche Vorrat an Clips gibt der Bedienperson weitere Zeit, um den leeren Spulenkörper von der jeweiligen Aufnahme abzunehmen und einen vollen darauf zu setzen.

Diese Funktionalität ist bei der gewählten Geometrie sogar auf sehr engem Raum gegeben. In den Fig. 6 bis 8 ist zu sehen, dass nämlich der Durchmesser der Spulenkörper 512 in etwa dem Durchmesser des halbkreisförmigen Abschnitts der Magazinstangen 100 entspricht. Die Magazinstange 100 nimmt gegenüber dem durch die ohnehin vorhandenen Spulenkörper 512, 513 benötigten Platz bei maximaler Länge des Puffervorrats keinen wesentlichen zusätzlichen Raum ein. Dies hat insbesondere den Vorteil der kompakten Bauweise. Jedoch ist die Erfindung nicht zwingend an diese Bauform gebunden. Den Schwenkantrieb vorausgesetzt, genügt die Forderung, dass der Vorschubweg kreissegmentförmig ist.

In Fig. 7 sind die Antriebselemente in einer anderen Stellung zu sehen. Sie sind so konzipiert, dass das gerade außer Eingriff befindliche Antriebselement 410, 312 wenn es das im Eingriff auf denselben Clipstrang befindliche Antriebselement 310 bzw. 412 passiert um sein jeweiliges Lager 318, 320 passiv gegen die Federkraft weggeschwenkt wird. Auch an Stelle dieser vorteilhaften Weiterbildung kann eine andere Konstruktion treten. Beispielsweise können die Vorschubwege beider auf denselben Clipstrang wirkenden Antriebselemente völlig separiert sein, so dass es keine solche Begegnung geben kann. Auch unter diesen Umständen ließe sich eine Doppelclipführung mit nur zwei (Schwenk-)Antrieben realisieren, jedoch zu dem Preis einer weniger kompakten Bauform.

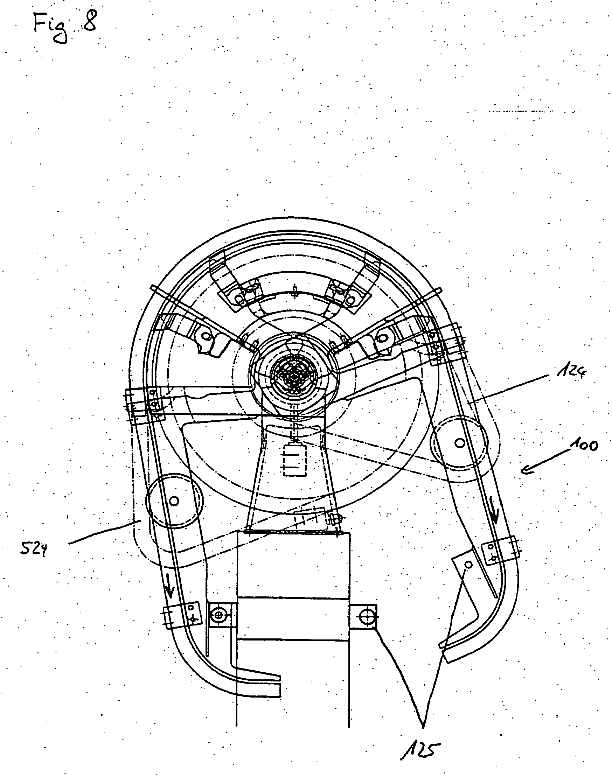

Fig. 8 zeigt dasselbe Ausführungsbeispiel der erfindungsgemäßen Clipzuführung, wobei in dieser Darstellung eine der beiden Magazinstangen 100 nach lösen der Arretierung 125 dergestalt weggeschwenkt ist, dass der zur Mündung in das entsprechende Vereinzelungsfenster vorgesehene Ausgang 128 zu diesem Vereinzelungsfenster beabstandet ist. Dieser Wegschwenkvorgang dient dem Zweck des Zugriffs auf das Vereinzelungsfenster und den Clipmechanismus der Verschließvorrichtung. Dies kann z.B. im Fall von Fehlfunktionen durch verklemmte oder aufgestaute Verschlussklammern in deren Vorschubkanal hinter dem Vereinzelungsfenster erforderlich werden. Vorteilhaft ist hierbei, dass durch die Schwenkbewegung der Magazinstange um ihre Aufnahme 123 die gesamte Magazinstange weiterhin an der Clipzuführung befestigt bleibt, während es bisher erforderlich war, die im Bereich ihres Ausgangs an das Gehäuse der Verschließeinrichtung angeflanschte Magazinstange völlig von der Verschließvorrichtung abzunehmen. Dies hatte den Folgeeffekt, dass zuerst der in der Magazinstange befindliche Clipstrang nach oben, d.h. gegen die Vorschubrichtung aus der Magazinstange herausgezogen werden muss, bevor die Magazinstange abgenommen und beiseite gelegt werden konnte. Demgegenüber kann der Clipstrang in der erfindungsgemäßen Magazinstange 100 beim Schwenken verbleiben. Er wird von dem jeweils im Eingriff befindlichen Antriebselement sogar in seiner Position gehalten, wodurch er in Folge der Schwenkbewegung auf der dem senkrechten Abschnitt 124 der Magazinstange gegenüberliegenden Seite wegen des Längenausgleichs etwas durchhängt.

Sollte es in Einzelfällen dennoch nötig sein, einen aufgezogenen Clipstrang von einer Magazinstage abzunehmen, dann wird dies erfindungsgemäß dadurch ermöglicht, dass mittels eines (weiteren) manuell betätigbaren Schalters, der das in Zusammenhang mit Fig. 3 beschriebene Heranfahren des radial beweglichen Teils 317 an den achsfesten Teil 316 der Nabe 315 auslöst, alle dem betreffenden Clipstrang zugeordneten Antriebselemente durch eine gleichzeitige Einfahrbewegung außer Eingriff gebracht werden können. Dann ist der Clipstrang frei und kann gegen die Vorschubrichtung von der Clipstange wieder abgezogen werden.

## Patentansprüche

1. Magazinstange (100) mit einem Eingang (130) und einem Ausgang (128) zum Führen eines Clipstranges (510) von einem oberhalb eines Vereinzelungsfensters einer Verschließvorrichtung angeordneten Clipvorrat zu dem im Wesentlichen vertikal angeordneten Vereinzelungsfenster,
**dadurch gekennzeichnet, dass** die Magazinstange (100) eine erste Umlenkung (120) aufweist, dergestalt dass der Clipsstrang (510) von unten in den Eingang (130) zuführbar ist.

2. Magazinstange (100) nach Anspruch 1,
**gekennzeichnet durch** einen stromabwärts hinter der ersten Umlenkung (120) befindlichen Abschnitt (124), auf dem der Clipstrang (510) nach unten führbar ist, und eine weiter stromabwärts befindliche zweite Umlenkung (126), dergestalt dass die Magazinstange (100) im Wesentlichen horizontal in ihren Ausgang mündet.

3. Magazinstange (100) nach Anspruch 2,
**dadurch gekennzeichnet, dass** die erste Umlenkung (120) durch einen in etwa halbkreisförmigen Abschnitt der Magazinstange (100) gebildet wird.

4. Magazinstange (100) nach Anspruch 3,
**dadurch gekennzeichnet, dass** die Magazinstange (100) mittels einer Aufnahme (123) um eine durch den halbkreisförmigen Abschnitt bestimmte Rotationsachse schwenkbar ist.

5. Clipzuführung mit einem Halter für eine den Clipvorrat bereithaltende Spule,
**gekennzeichnet durch** eine Magazinstange (100) nach einem der Ansprüche 1 bis 4.

6. Clipzuführung nach Anspruch 5 in Verbindung mit Anspruch 4,
**dadurch gekennzeichnet, dass** der Halter eine Axialaufnahme für die Spule aufweist und dass die Rotationsachse der Magazinstange (100) mit der Achse der Axialaufnahme zusammenfällt.

7. Clipzuführung nach Anspruch 6,
**dadurch gekennzeichnet, dass** der Radius des halbkreisförmigen Abschnitts im Wesentlichen dem Radius der Spule gleicht.

8. Clipzuführung nach einem der Ansprüche 5 bis 7,
**dadurch gekennzeichnet, dass** zwischen dem Clipvorrat und dem Eingang der Magazinstange (100) eine Umlenkrolle eingeschaltet ist.

9. Verschließvorrichtung zum Abteilen von Portionspackungen eines unterteilbaren Füllguts in einer flexiblen Schlauchhülle durch Einschnüren des gefüllten Schlauches und Aufbringen zweier Verschlusselemente (510) auf den durch axiales Verdrängen des Füllgutes gebildeten Schlauchzopf, mit einer Clipzuführung nach einem der Ansprüche 5 bis 8.

## Claims

1. A magazine bar (100) having an entry (130) and an exit (128) for guiding a line of clips (510) from a clip supply disposed above a separating window of a clipping device to the substantially vertically arranged separating window,
**characterized in that** the magazine bar (100) has a first deflection (120) such that the line of clips (510) can be fed into the entry (130) from below.

2. A magazine bar (100) according to claim 1,
**characterized by** a portion (124) located downstream from the first deflection, on which the line of clips (510) can be guided downwards, and a second deflection (126) located further downstream in such a form that the magazine bar (100) opens substantially horizontally into its exit.

3. A magazine bar (100) according to claim 2,
**characterized in that** the first deflection (120) is formed by an approximately semi-circular portion of the magazine bar (100).

4. A magazine bar (100) according to claim 3,
**characterized in that** the magazine bar (100) is pivotable by means of a mounting means (123) about an axis of rotation determined by the semi-circular portion.

5. A clip feeder comprising a holder for a reel holding the clip supply,
**characterized by** a magazine bar (100) according to one of claims 1 to 4.

6. A clip feeder according to claim 5 in combination with claim 4,
**characterized in that** the holder comprises an axial mounting means for the reel and that the axis of rotation of the magazine bar (100) coincides with the axis of the axial mounting means.

7. A clip feeder according to claim 6,
**characterized in that** the radius of the semi-circular portion is substantially equal to the radius of the reel.

8. A clip feed according to one of claims 5 to 7,
**characterized in that** a deflection roller is interposed between the clip supply and the entry of the magazine bar (100).

9. A clipping device for partitioning portion packs of a sub-dividable filling material in a flexible tubular casing by constricting the filled tube and applying two clips (510) by means of a clipping device according to one of claims 5 to 8 to the gathered end formed by axial displacement of the filling material.

## Revendications

1. Barre de magasin (100) comprenant une entrée (130) et une sortie (128) pour guider et mener une file d'agrafes (510) à partir d'une réserve d'agrafes agencée au-dessus d'une fenêtre d'individualisation d'un dispositif de fermeture, vers la fenêtre d'individualisation agencée sensiblement de manière verticale,
**caractérisée en ce que** la barre de magasin (100) présente une première déviation (120) de façon telle que la file d'agrafes (510) puisse être apportée par le bas dans l'entrée (130).

2. Barre de magasin (100) selon la revendication 1,
**caractérisée par** un tronçon (124) succédant en aval à la première déviation (120), et sur lequel la file d'agrafes (510) peut être apportée vers le bas, ainsi que par une deuxième déviation (126) située plus en aval, de façon telle que la barre de magasin (100) débouche sensiblement horizontalement dans sa sortie.

3. Barre de magasin (100) selon la revendication 2,
**caractérisée en ce que** la première déviation (120) est formée par un tronçon sensiblement en forme de demi-cercle de la barre de magasin (100).

4. Barre de magasin (100) selon la revendication 3,
**caractérisée en ce que** la barre de magasin (100) peut pivoter, au moyen d'un logement de réception (123), autour d'un axe de rotation déterminé par le tronçon en forme de demi-cercle.

5. Dispositif d'approvisionnement d'agrafes comprenant un support pour une bobine fournissant la réserve d'agrafes,
**caractérisé par** une barre de magasin (100) selon l'une des revendications 1 à 4.

6. Dispositif d'approvisionnement d'agrafes selon la revendication 5 en liaison avec la revendication 4,
**caractérisé en ce que** le support présente un élément de réception axial pour la bobine et **en ce que** l'axe de rotation de la barre de magasin (100) coïncide avec l'axe de l'élément de réception axial.

7. Dispositif d'approvisionnement d'agrafes selon la revendication 6,
**caractérisé en ce que** le rayon du tronçon en forme de demi-cercle est sensiblement identique au rayon de la bobine.

8. Dispositif d'approvisionnement d'agrafes selon l'une des revendications 5 à 7,
**caractérisé en ce qu'**entre la réserve d'agrafes et l'entrée de la barre de magasin (100) est monté un galet de renvoi.

9. Dispositif de fermeture pour produire des emballages en portions d'un produit de remplissage dans une enveloppe tubulaire flexible pouvant être subdivisée par rétrécissement de l'enveloppe tubulaire et application de deux éléments de fermeture (510) sur la tresse d'enveloppe tubulaire formée par refoulement axial du produit de remplissage, à l'aide d'un dispositif d'approvisionnement d'agrafes selon l'une des revendications 5 à 8.
